# EUROPÄISCHE PATENTSCHRIFT

(11) **EP 4 159 663 B1**
(45) Veröffentlichungstag und Bekanntmachung des Hinweises auf die Patenterteilung: **21.10.2026**
(21) Anmeldenummer: 22188514.8
(22) Anmeldetag: 03.08.2022
(51) Int. Cl.: B66F 9/06, B66F 9/075, B66F 9/24

(54) **SYSTEM UND VERFAHREN ZUR LASTÜBERGABE ZWISCHEN EINEM FLURFÖRDERZEUG UND EINEM FLACHEN, AUTONOMEN FAHRZEUG**
SYSTEM AND METHOD FOR TRANSFERRING LOAD BETWEEN AN INDUSTRIAL TRUCK AND A FLAT AUTONOMOUS VEHICLE
SYSTÈME ET PROCÉDÉ DE TRANSFERT DE CHARGE ENTRE UN CHARIOT DE MANUTENTION ET UN VÉHICULE PLAT AUTONOME

(30) Priorität: 01.10.2021 DE 102021125516
(43) Veröffentlichungstag der Anmeldung: 05.04.2023
(73) Patentinhaber: Linde Material Handling GmbH, 63743 Aschaffenburg (DE)
(72) Erfinder: Magny, Jean-Baptiste, 86000 Poitiers (FR)
(74) Vertreter: Patentship Patentanwaltgesellschaft

(56) Entgegenhaltungen:
- EP-A1- 3 816 895
- DE-A1- 102020 104 796
- US-A- 5 202 832
- US-A1- 2016 132 059

## Beschreibung

Die Erfindung betrifft ein System und ein Verfahren zur Lastübergabe zwischen einem Flurförderzeug mit einem höhenverstellbaren Lastaufnahmemittel und einem flachen, autonomen Fahrzeug mit einer anhebbaren Lastplattform.

In zunehmendem Maße finden flache automatisierte oder autonome Flurförderzeuge, die auch als Load-Deck-Fahrzeuge oder Turtles bezeichnet werden, Einsatz in Logistikkonzepten. Diese Fahrzeuge sind zum Unterfahren und Anheben von Lasten konzipiert. Dies setzt allerdings voraus, dass die Lasten einen hinreichenden Abstand zum Boden in einem breiteren und zum Anheben geeigneten Bereich bieten. Bei Regalen ist das grundlegend erfüllbar. Bei Paletten sind hingegen weitere Übergabemittel notwendig, um dieses Anheben und Absetzen der Last zu ermöglichen.

Übergabeprozesse dieser Art werden nach heutigem Stand der Technik durch Zwischenladeplätze realisiert, die in der Regel aus einem mechanischen Aufbau bestehen, der die Anforderungen der Lasthandhabungsmittel beider Flurförderzeuge berücksichtigt und prozessseitig adaptiert. Dieser Aufbau kann statisch ausgeführt sein oder durch eine bewegliche Kinematik, gegebenenfalls ergänzt durch Antriebskomponenten, die in der Regel elektrisch ausgeführt sind, erweitert sein.

Bedingt durch die Notwendigkeit von mechanischen Zwischenladeplätzen ist die Interaktion von manuellen Flurförderzeugen mit Load-Deck-Fahrzeugen nur eingeschränkt möglich, was die Kombinierbarkeit beider Fahrzeugkonzepte stark einschränkt.

In gemischten Umgebungen, in denen automatisierte Fahrzeuge und manuelle Flurförderzeuge nebeneinander betrieben werden, ist es erforderlich, dass die automatisierten Fahrzeuge ihre Aufgabe der Lastübertragung unter sicheren Bedingungen erfüllen können. Aus Effizienzgründen ist es aber auch erforderlich, dass die manuellen Flurförderzeuge Lasten auf die automatisierten Fahrzeuge übergeben können.

Ein möglicher Anwendungsfall besteht zum Beispiel darin, dass ein manuelles Flurförderzeug eine Palette in 6 m Höhe aufnimmt und auf ein automatisiertes Fahrzeug mit einer Lastplattform übergibt. Ein solcher Anwendungsfall bringt folgende Schwierigkeit mit sich: Wenn der Fahrer des manuellen Flurförderzeugs die Übergabe der Palette auf die Lastplattform des autonomen Fahrzeugs absenkt, kann es vorkommen, dass hohe Stöße und Kräfte auf das automatisierte Fahrzeug auftreten, die das automatisierte Fahrzeug beschädigen können.

Aus der EP 3 816 895 A1 ist ein Verfahren zum Betreiben eines Flurförderzeugs und ein intralogistisches System zur Durchführung des Verfahrens bekannt. Dieses Dokument offenbart damit ein System zur Lastübergabe mit einem Flurförderzeug mit einem höhenverstellbaren Lastaufnahmemittel und einem autonomen Fahrzeug mit einer anhebbaren Lastplattform, wobei ein Steuerungssystem eine Abfolge von Schritten zur Übergabe einer Last steuert, insbesondere das Einstellen einer Übergabehöhe, das Unterfahren des Lastaufnahmemittels durch das autonome Fahrzeug sowie das anschließende Entfernen der Fahrzeuge voneinander.

Die US 2016/132059 A1 offenbart eine positionsgesteuerte Roboterflotte mit visuellen Händedrücken.

Aus der US 5 202 832 A ist ein Automatisierungssystem für die Materialhandhabung in einem Lager offenbart, das ein tragbares Modul umfasst, mit dem Material auf ein automatisch geführtes Fahrzeug geladen und von diesem entladen werden kann.

Aus der DE 10 2020 104 796 A1 ist ein fahrerloses Transportfahrzeug mit einer Lastaufnahmeplattform bekannt.

Der vorliegenden Erfindung liegt die Aufgabe zugrunde, ein System und ein Verfahren der genannten Art so auszugestalten, dass eine effiziente Lastübergabe von einem Flurförderzeug auf ein autonomes Fahrzeug ohne Gefahr, das automatisierte Fahrzeug zu beschädigen, ermöglicht wird.

Diese Aufgabe wird bei einem System zur Lastübergabe mit einem Flurförderzeug mit einem höhenverstellbaren Lastaufnahmemittel und einem flachen, autonomen Fahrzeug mit einer anhebbaren Lastplattform erfindungsgemäß dadurch gelöst, dass das System ein Steuerungssystem umfasst, das derart ausgebildet ist, dass eine Abfolge mindestens folgender Schritte gesteuert wird:
a) Einstellung des Lastaufnahmemittels des Flurförderzeugs auf eine Übergabehöhe,
b) Unterfahren des Lastaufnahmemittels des Flurförderzeugs durch das autonome Fahrzeug,
c) Anheben der Lastplattform des autonomen Fahrzeugs mindestens auf die Übergabehöhe und Übergeben der Last und
d) Entfernen des Flurförderzeugs und des autonomen Fahrzeugs voneinander.

Als autonomes Fahrzeug im Sinn der Erfindung soll ein autonomes oder automatisiertes Fahrzeug verstanden werden.

Das Steuerungssystem kann ein elektronisches Computersystem umfassen, auf dem ein Computerprogramm installiert ist, das die Abfolge der Schritte steuert. Dabei kann das Steuerungssystem zentral angeordnet sein und über ein Kommunikationssystem mit dem Flurförderzeug und dem autonomen Fahrzeug in Wirkverbindung stehen, so dass die Abfolge der Schritte zentral koordiniert werden kann.

Gemäß einer besonders bevorzugten Ausgestaltung der Erfindung ist das Steuerungssystem auf dem autonomen Fahrzeug untergebracht, so dass die Abfolge der Schritte vom autonomen Fahrzeug aus koordiniert werden kann. Dabei können Funktionen des autonomen Fahrzeugs, die zur Ausführung der Schritte erforderlich sind, zum Beispiel die Steuerung eines Fahrantriebs und/oder Hubantriebs des autonomen Fahrzeugs, direkt durch das, auf dem autonomen Fahrzeug untergebrachte, Steuerungssystem gesteuert werden. Funktionen des Flurförderzeugs, die zur Ausführung der Schritte erforderlich sind, zum Beispiel die Steuerung eines Fahrantriebs und/oder Hubantriebs des Flurförderzeugs, werden von dem, auf dem autonomen Fahrzeug untergebrachten, Steuerungssystem über ein Kommunikationssystem angewiesen.

Vorteilhafterweise umfasst das System mindestens folgende Systemkomponenten:
a) eine Systemkomponente A, die dazu ausgebildet ist, das Lastaufnahmemittel des Flurförderzeugs auf eine Übergabehöhe einzustellen,
b) eine Systemkomponente B, die dazu ausgebildet ist, ein Unterfahren des Lastaufnahmemittels des Flurförderzeugs durch das autonome Fahrzeug zu steuern,
c) eine Systemkomponente C, die dazu ausgebildet ist, ein Anheben der Lastplattform des autonomen Fahrzeugs mindestens auf die Übergabehöhe und eine Übergabe der Last zwischen dem Flurförderzeug und dem autonomen Fahrzeug zu steuern und
d) eine Systemkomponente D, die dazu ausgebildet ist, ein Entfernen des Flurförderzeugs und des autonomen Fahrzeugs voneinander zu steuern.

Dabei kann das System halbautomatisch oder vollautomatisch ausgeführt sein.

Das halbautomatische System umfasst als Flurförderzeug ein manuelles Flurförderzeug mit einem Fahrerarbeitsplatz. Dabei kann es sich beispielsweise um ein herkömmliches Flurförderzeug, beispielsweise einen Gabelstapler, handeln, das manuell von einem Fahrer gesteuert wird.

Bei diesem halbautomatischen System umfasst die Systemkomponente A insbesondere manuell bedienbare Bedienelemente des manuellen Flurförderzeugs zur Höhenverstellung des Lastaufnahmemittels.

Gemäß einer bevorzugten Ausgestaltung des halbautomatischen Systems umfasst die Systemkomponente A des halbautomatischen Systems eine Lasterkennungseinrichtung des autonomen Fahrzeugs, die dazu ausgebildet ist, die Last auf dem Lastaufnahmemittel des Flurförderzeugs zu erkennen. Dabei kann die Lasterkennungseinrichtung eine Kamera und/oder einen QR-Code-Leser und/oder einen Laser umfassen. Auf diese Weise kann das autonome Fahrzeug erkennen, ob ein Flurförderzeug mit aufgenommener Last zur Lastübergabe bereitsteht.

Vorteilhafterweise umfasst die Systemkomponente A des halbautomatischen Systems eine Informationsübermittlungseinrichtung des autonomen Fahrzeugs, die dazu ausgebildet ist, an das Flurförderzeug Informationen zu übermitteln, das Lastaufnahmemittel des Flurförderzeugs auf die mit einer vorgegebenen Hubhöhe der Lastplattform des autonomen Fahrzeugs kompatible Übergabehöhe einzustellen.

Dabei kann die Informationsübermittlungseinrichtung insbesondere eine optische und/oder akustische Signalisierungseinrichtung umfassen. Auf diese Weise kann der Fahrer des manuellen Flurförderzeugs angewiesen werden, die Höhenverstellung des Lastaufnahmemittels des Flurförderzeugs so zu betätigen, dass die gewünschte Übergabehöhe eingestellt wird. Beispielsweise kann mittels Leuchtanzeigen mit Pfeilsymbolen dem Fahrer des manuellen Flurförderzeugs signalisiert werden, dass das Lastaufnahmemittel abgesenkt werden soll.

Bevorzugt ist die Informationsübermittlungseinrichtung dazu ausgebildet, Informationen über das Erreichen der Übergabehöhe an das Flurförderzeug zu übermitteln. Beispielsweise kann mittels einer Leuchte oder durch Anzeigen eines Stopsymbols dem Fahrer des manuellen Flurförderzeugs signalisiert werden, dass er die Senkbewegung des Lastaufnahmemittels beenden soll.

Eine weitere Ausgestaltung der Erfindung sieht vor, dass die Systemkomponente A des halbautomatischen Systems eine Sensoreinrichtung des Flurförderzeugs umfasst, die dazu ausgebildet ist, die Hubhöhe des Lastaufnahmemittels des Flurförderzeugs zu erkennen. Auf diese Weise kann das Absenken des Lastaufnahmemittels sensorgestützt assistiert werden. Die Sensoreinrichtung kann so ausgebildet sein, dass bei Erreichen der Übergabehöhe eine Stop-Signalisierung und/oder ein automatischer Eingriff in die Senkbewegung des Lastaufnahmemittels des Flurförderzeugs erfolgt.

Bei Ausbildung des Systems als vollautomatisches System umfasst das System zweckmäßigerweise als Flurförderzeug ein, mit einer elektronischen Hub-Steuerungseinrichtung zur Höhenverstellung des Lastaufnahmemittels ausgestattetes, manuelles Flurförderzeug oder ein, mit einer elektronischen Hub-Steuerungseinrichtung zur Höhenverstellung des Lastaufnahmemittels ausgestattetes, automatisiertes oder autonomes Flurförderzeug. Das Flurförderzeug kann also in einer einfachen Ausführung als manuelles Flurförderzeug ausgebildet sein, bei dem zwar noch Fahrmanöver manuell von einem Fahrer durchgeführt werden, das aber bereits mit einer elektronischen Steuerungseinrichtung für die Höhenverstellung des Lastaufnahmemittels versehen ist, die auch von außen beeinflusst werden kann. In einer höheren Entwicklungsstufe kann das Flurförderzeug als automatisiertes oder autonomes Flurförderzeug ausgebildet sein, bei dem eine Vielzahl oder alle Funktionen automatisiert oder autonom durch eine elektronische Steuerungseinrichtung durchgeführt werden.

Beim vollautomatischen System wird die Hub-Steuerungseinrichtung des Flurförderzeugs durch das autonome Fahrzeug gesteuert. Das Flurförderzeug wird also durch das autonome Fahrzeug angewiesen, das Lastaufnahmemittel auf die gewünschte Übergabehöhe einzustellen. Dabei kann das autonome Fahrzeug insbesondere die komplette Steuerung des Absenkvorgangs des Lastaufnahmemittels des Flurförderzeugs übernehmen.

Um die notwendigen Anweisungen übermitteln zu können, umfasst das vollautomatische System zweckmäßigerweise Kommunikationseinrichtungen des Flurförderzeugs und des autonomen Fahrzeugs, die dazu ausgebildet sind, Informationen zwischen dem Flurförderzeug und dem autonomen Fahrzeug auszutauschen.

Dabei können die Kommunikationseinrichtungen Funkeinrichtungen, insbesondere WIFI-, Bluetooth-, UWB-, 4G- oder 5G- Funkeinrichtungen, umfassen.

Zur Steuerung der Einstellung der Höhe des Lastaufnahmemittels auf die Übergabehöhe umfasst die Systemkomponente A des vollautomatischen Systems vorzugsweise eine, mit der Kommunikationseinrichtung des autonomen Fahrzeugs in Wirkverbindung stehende, elektronische Hub-Steuerungs-Anweisungseinheit des autonomen Fahrzeugs, die dazu ausgebildet ist, Steuerungsanweisungen über die Kommunikationseinrichtung des autonomen Fahrzeugs an die Kommunikationseinrichtung des Flurförderzeugs zu übermitteln und die, mit der Kommunikationseinrichtung des Flurförderzeugs in Wirkverbindung stehende, Hub-Steuerungseinrichtung des Flurförderzeugs so zu steuern, dass das Lastaufnahmemittel des Flurförderzeugs auf die mit einer vorgegebenen Hubhöhe der Lastplattform des autonomen Fahrzeugs kompatible Übergabehöhe eingestellt wird.

Vorteilhafterweise umfasst die Systemkomponente A des vollautomatischen Systems eine Sensoreinrichtung des autonomen Fahrzeugs, die dazu ausgebildet ist, die Höhe des Lastaufnahmemittels des Flurförderzeugs kontinuierlich zu überwachen. Die Sensoreinrichtung steht zweckmäßigerweise mit der elektronischen Hub-Steuerungs-Anweisungseinheit des autonomen Fahrzeugs in Wirkverbindung. Somit kann die elektronische Hub-Steuerungs-Anweisungseinheit des autonomen Fahrzeugs bei sensiertem Erreichen der Übergabehöhe eine Stop-Anweisung an die Hub-Steuerungseinrichtung des Flurförderzeug übermitteln.

Zusätzlich oder alternativ kann auch das Flurförderzeug mit einem Hubhöhen-Sensor ausgestattet sein, der das Erreichen der Übergabehöhe meldet.

Ist die Übergabehöhe erreicht, wird sowohl beim halbautomatischen System als auch beim vollautomatischen System durch die Systemkomponente B das Unterfahren des Lastaufnahmemittels des stehenden Flurförderzeugs durch das autonome Fahrzeug gesteuert. Hierzu ist gemäß einer bevorzugten Ausgestaltung vorgesehen, dass die Systemkomponente B eine automatische elektronische Fahr-Steuerungseinheit des autonomen Fahrzeugs umfasst, die dazu ausgebildet ist, ein Unterfahren des Lastaufnahmemittels des Flurförderzeugs durch das autonome Fahrzeug nach erfolgter Einstellung des Lastaufnahmemittels auf die Übergabehöhe automatisch zu steuern.

Nach erfolgtem Unterfahren des Lastaufnahmemittels durch das autonome Fahrzeug wird ebenfalls sowohl beim halbautomatischen System als auch beim vollautomatischen System durch die Systemkomponente C das Anheben der Lastplattform des autonomen Fahrzeugs gesteuert. Hierzu ist gemäß einer vorteilhaften Ausgestaltung vorgesehen, dass die Systemkomponente C eine elektronische Lastplattform-Hub-Steuerungseinheit des autonomen Fahrzeugs umfasst, die dazu ausgebildet ist, ein Anheben der Lastplattform des autonomen Fahrzeugs mindestens auf die Übergabehöhe nach erfolgtem Unterfahren des Lastaufnahmemittels des Flurförderzeugs durch das autonome Fahrzeug zu steuern.

Mit dem Anheben der Lastplattform des autonomen Fahrzeugs auf die Übergabehöhe erfolgt die Lastübergabe vom Lastaufnahmemittel des Flurförderzeugs auf die Lastplattform des autonomen Fahrzeugs und die Last wird von dem Lastaufnahmemittels des manuellen Flurförderzeugs auf die Lastplattform des autonomen Fahrzeugs übergeben. Die Lastplattform des autonomen Fahrzeugs wird hierzu bevorzugt soweit angehoben werden, dass die Last auf der Lastplattform aufliegt und gerade von dem Lastaufnahmemittel des Flurförderzeugs abhebt.

Nach erfolgter Lastübergabe wird durch die Systemkomponente C das Entfernen des Flurförderzeugs und des autonomen Fahrzeugs voneinander gesteuert. Hierzu ist gemäß einer bevorzugten Ausgestaltung vorgesehen, dass die Systemkomponente D eine automatische elektronische Fahr-Steuerungseinheit des autonomen Fahrzeugs und/oder eine Fahr-Steuerungseinrichtung des Flurförderzeugs umfasst, die dazu ausgebildet sind, ein Entfernen des Flurförderzeugs und des autonomen Fahrzeugs voneinander nach erfolgter Lastübergabe zu steuern. Bei einer Lastübergabe vom Flurförderzeug auf das autonome Fahrzeug kann das autonome Fahrzeug mit der angehobenen Last einfach aus dem Lastaufnahmemittel des Flurförderzeugs, zum Beispiel einer Lastgabel, herausfahren. Dieser Entfernungsvorgang kann durch die Fahr-Steuerungseinrichtung des autonomen Fahrzeugs automatisch gesteuert werden. Auch das Flurförderzeug kann in diesem Fall mit abgesenktem Lastaufnahmemittel, zum Beispiel mit abgesenkter Lastgabel, aus der Last herausfahren. Dieser Vorgang kann im Falle eines manuellen Flurförderzeugs durch manuelle Betätigung einer manuellen Fahr-Steuerungseinrichtung durch den Fahrer gesteuert werden. Im Falle eines autonomen Flurförderzeugs kann der Entfernungsvorgang auch durch eine elektronische Fahr-Steuerungseinrichtung des Flurförderzeugs automatisch gesteuert werden.

Die Erfindung betrifft ferner ein Verfahren zur Lastübergabe zwischen einem Flurförderzeug mit einem höhenverstellbaren Lastaufnahmemittel und einem flachen, autonomen Fahrzeug mit einer anhebbaren Lastplattform.

Bei diesem Verfahren wird die gestellte Aufgabe erfindungsgemäß dadurch gelöst, dass die Lastübergabe durch Ausführung mindestens folgender Verfahrensschritte durchgeführt wird:
a) Einstellung des Lastaufnahmemittels des Flurförderzeugs auf eine Übergabehöhe,
b) Unterfahren des Lastaufnahmemittels des Flurförderzeugs durch das autonome Fahrzeug,
c) Anheben der Lastplattform des autonomen Fahrzeugs mindestens auf die Übergabehöhe und Übergeben der Last und
d) Entfernen des Flurförderzeugs und des autonomen Fahrzeugs voneinander.

Die Erfindung bietet eine Reihe von Vorteilen:
Mit der Erfindung ergibt sich eine Verbesserung der Lastübergabeeffizienz und des Lastdurchsatzes. Nach dem Stand der Technik wird eine Lastübergabe von einem Flurförderzeug auf ein autonomes Fahrzeug durch den Einsatz von Übergabestationen realisiert. Dabei erfolgt mit dem Flurförderzeug eine manuelle Übergabe der Last auf die Übergabestation. Anschließend muss das autonome Fahrzeug zur Übergabestation fahren, um die Last anzuheben und von der Übergabestation aufzunehmen.

Die Erfindung ermöglicht den Verzicht auf zusätzliche Übergabestationen. Insbesondere in geschlossenen Zonen ist es nicht praktisch, Übergabestationen in der Nähe des Einsatzbereichs der Flurförderzeuge zu haben. Übergabestationen werden heute als Zwischenübergabebereiche zwischen manuellen Flurförderzeugen und automatisierten Fahrzeugen genutzt. Diese Übergabestationen befinden sich nicht unbedingt in der Nähe des Einsatzbereichs der Flurförderzeuge. Mit der vorgeschlagenen Lösung kann auf einige oder alle Übergabestationen verzichtet werden.

Außerdem vermindert die Erfindung das Risiko, das autonome Fahrzeug bei der Lastübergabe zu beschädigen, erheblich. Das Absetzen der Last mit einem manuellen Flurförderzeug führt häufig zu starken Stößen, wenn die Last auf der gewünschten Ablagefläche, zum Beispiel auf dem Boden oder auf einer Ladefläche einer Übergabestation, landet. Diese Art von Stößen kann besonders schädlich sein, wenn ein Absetzen einer Last von einem manuellen Flurförderzeug auf ein autonomes Fahrzeug mit einer Lastplattform bei der Lastübergabe vom Flurförderzeug auf das autonome Fahrzeug erfolgt. Die vorgeschlagene Lösung verhindert Schäden am autonomen Fahrzeug, wenn die Last vom Flurförderzeug auf das autonome Fahrzeug übertragen wird.

Weitere Vorteile und Einzelheiten der Erfindung werden anhand der in den schematischen Figuren dargestellten Ausführungsbeispiele näher erläutert. Hierbei zeigen
- Figur 1: Phasen der Lastübergabe bei einem erfindungsgemäßen halbautomatischen System und
- Figur 2: Phasen der Lastübergabe bei einem erfindungsgemäßen vollautomatischen System.

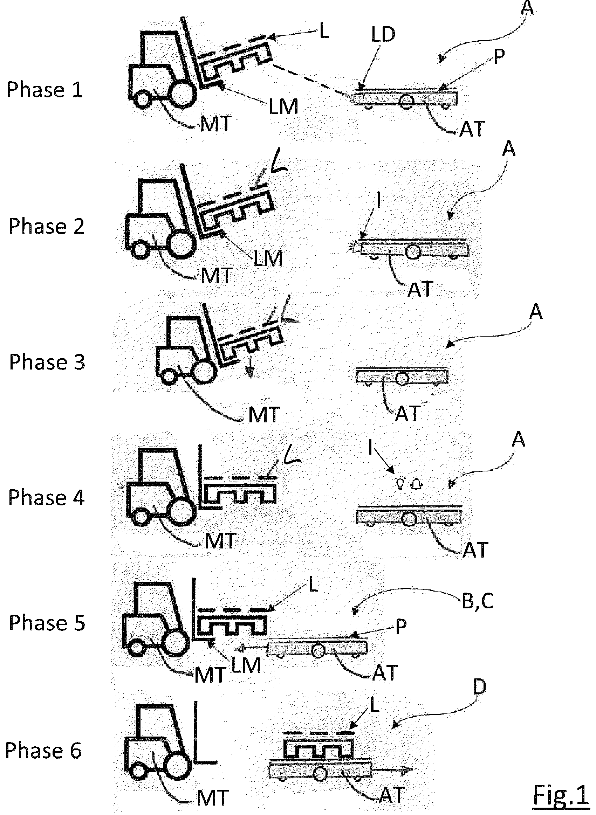

Die Figur 1 zeigt verschiedene Phasen 1 bis 6 der Lastübergabe von einem manuellen Flurförderzeug MT auf ein autonomes Fahrzeug AT bei einem halbautomatischen System zur Lastübergabe. Das manuelle Flurförderzeug MT kann als herkömmlicher Gabelstapler mit einem Lastaufnahmemittel LM, zum Beispiel in Form einer Lastgabel, ausgebildet sein. Das autonome Fahrzeug ist als flaches, automatisch navigierendes Fahrzeug mit einer anhebbaren und absenkbaren Lastplattform P zur Übernahme der Last L vom manuellen Flurförderzeug MT ausgebildet.

In Phase 1 wird von dem autonomen Fahrzeug AT die auf dem Lastaufnahmemittel LM des Flurförderzeugs MT befindliche Last L mittels einer Lasterkennungseinrichtung LD des autonomen Fahrzeugs AT, die im vorliegenden Beispiel eine Kamera umfasst, erkannt. Die Lasterkennungseinrichtung LD ist Bestandteil einer Systemkomponente A, die dazu ausgebildet ist, das Lastaufnahmemittel LM des manuellen Flurförderzeugs MT auf die Übergabehöhe einzustellen.

In Phase 2 informiert das autonome Fahrzeug AT das manuelle Flurförderzeug MT, dass das Lastaufnahmemittel LM des manuellen Flurförderzeugs MT abgesenkt werden kann. Hierzu ist die Informationsübermittlungseinrichtung I vorgesehen, die ebenfalls Bestandteil der Systemkomponente A ist. Im vorliegenden Beispiel umfasst die Informationsübermittlungseinrichtung I eine optische Signalisierungseinrichtung am autonomen Fahrzeug AT, insbesondere eine Leuchte mit einem Pfeilsymbol, welche dem, in der Figur 1 nicht dargestellten, Fahrer des manuellen Flurförderzeugs MT signalisiert, dass er das Lastaufnahmemittel LM des Flurförderzeugs durch Betätigung von Bedienelementen zur Höhenverstellung des Lastaufnahmemittel LM absenken kann.

Alternativ oder zusätzlich kann die Informationsübermittlungseinrichtung I des autonomen Fahrzeugs AT über ein Kommunikationsverbindungssystem entsprechende Informationen an eine Anzeigevorrichtung, beispielswiese einen Display, im Fahrerarbeitsplatz des Flurförderzeugs MT senden, um dem Fahrer des manuellen Flurförderzeugs MT zu signalisieren, dass er das Lastaufnahmemittel LM des Flurförderzeugs durch Betätigung von Bedienelementen zur Höhenverstellung des Lastaufnahmemittel LM absenken kann.

In Phase 3 senkt der Fahrer des manuellen Flurförderzeugs MT das Lastaufnahmemittel LM durch entsprechende Betätigung von Bedienelementen zur Höhenverstellung des Lastaufnahmemittel LM ab. Dabei wird der Fahrer des manuellen Flurförderzeugs MT durch das autonome Fahrzeug AT instruiert, bis die vorgegebene Übergabehöhe erreicht ist, die mit der Hubhöhe der Lastplattform P des autonomen Fahrzeugs AT kompatibel ist.

In Phase 4 wird der Fahrer des manuellen Flurförderzeugs MT durch die Informationsübertragungseinrichtung I des autonomen Fahrzeugs AT, beispielsweise mittels eines optischen und/oder akustischen Signals, informiert, dass das Lastaufnahmemittel LM die Übergabehöhe erreicht hat. Optional kann das manuelle Flurförderzeug MT auch mit einer Sensoreinrichtung ausgestattet sein, die die Hubhöhe des Lastaufnahmemittels LM des Flurförderzeugs MT erfasst und das Absenken des Lastaufnahmemittel LM bei Erreichen der Übergabehöhe automatisch stoppt.

In Phase 5 unterfährt das autonome Fahrzeug AT das auf der Übergabehöhe befindliche Lastaufnahmemittel LM des manuellen Flurförderzeugs MT. Hierzu verfügt das autonome Fahrzeug AT über eine, in der Figur 1 nicht dargestellte, Fahr-Steuerungseinheit, die Bestandteil einer Systemkomponente B ist, welche dazu ausgebildet ist, das Unterfahren des Lastaufnahmemittels LM des Flurförderzeugs MT durch das autonome Fahrzeug AT zu steuern. Nach dem Unterfahren wird die Lastplattform P des autonomen Fahrzeugs AT mindestens auf die Übergabehöhe angehoben. Durch leichtes Überschreiten der Übergabehöhe stützt sich die Last L auf der Lastplattform P des autonomen Fahrzeugs AT ab und wird vom Lastaufnahmemittel LM des manuellen Flurförderzeugs MT abgehoben. Für das Anheben der Lastplattform P des autonomen Fahrzeugs AT ist eine, in der Figur 1 nicht dargestellte, elektronische Lastplattform-Hub-Steuerungseinheit des autonomen Fahrzeugs vorgesehen, die Bestandteil einer Systemkomponente C ist.

In Phase 6 entfernt sich das autonome Fahrzeug AT mit der übergebenen Last L vom manuellen Flurförderzeug MT. Hierfür ist die, in der Figur 1 nicht dargestellte, Fahr-Steuerungseinheit des autonomen Fahrzeugs AT vorgesehen, die Bestandteil der Systemkomponente D ist. Auch der Fahrer des manuellen Flurförderzeugs MT kann nach erfolgter Lastübergabe durch manuelle Betätigung der Fahr-Steuerungseinrichtung des manuellen Flurförderzeugs MT das manuelle Flurförderzeug MT aus dem Übergabebereich wegfahren.

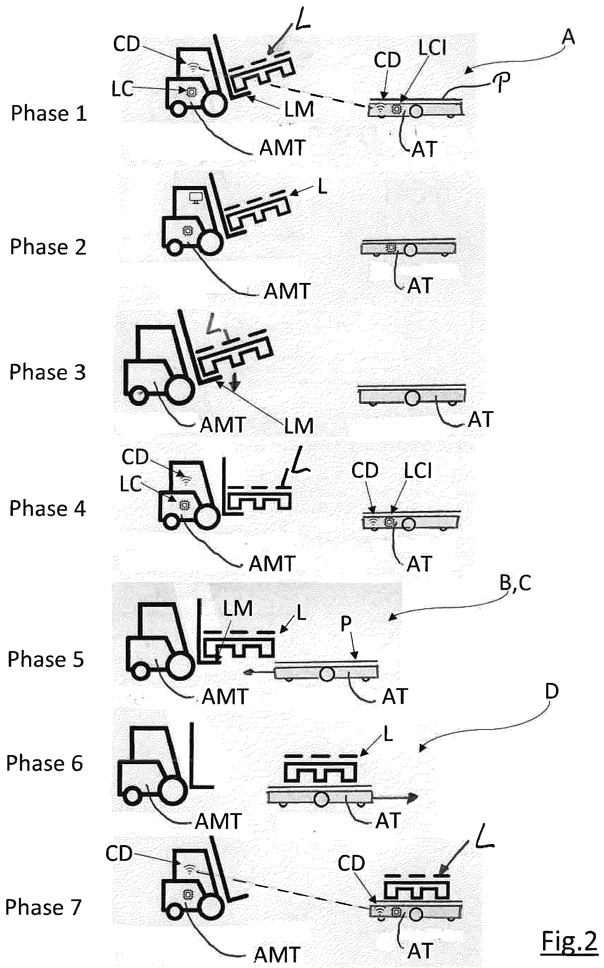

Die Figur 2 zeigt verschiedene Phasen 1 bis 7 der Lastübergabe von einem automatisierten Flurförderzeug AMT auf ein autonomes Fahrzeug AT bei einem vollautomatischen System zur Lastübergabe. Das automatisierte Flurförderzeug AMT der Figur 2 unterscheidet sich vom manuellen Flurförderzeug MT von Figur 1 dadurch, dass es mit einer, in der Figur 2 nicht dargestellten, elektronischen Hub-Steuerungseinrichtung zur Höhenverstellung des Lastaufnahmemittels LM ausgestattet ist, auf die von außen zugegriffen werden kann. Die Hub-Steuerung des Lastaufnahmemittels LM des Flurförderzeugs AMT kann daher automatisch vom autonomen Fahrzeug AT aus erfolgen, ohne dass der Fahrer des automatisierten Flurförderzeugs AMT manuell eingreifen muss. Alternativ kann das automatisierte Flurförderzeug AMT ein fahrerloses Flurförderzeug sein.

In Phase 1 beginnen das autonome Fahrzeug AT und das automatisierte Flurförderzeug AMT mit der Kommunikation. Hierfür sind das autonome Fahrzeug AT und das automatisierte Flurförderzeug AMT jeweils mit einer Kommunikationseinrichtung CD versehen, die insbesondere Funkeinrichtungen umfassen können. Die Kommunikationseinrichtungen CD stehen mit einer Hub-Steuerungs-Anweisungseinheit LCI des autonomen Fahrzeugs AT und einer Hub-Steuerungseinrichtung LC des automatisierten Flurförderzeugs AMT in Wirkverbindung und sind gemeinsam Bestandteil einer Systemkomponente A, die dazu ausgebildet ist, das Lastaufnahmemittel LM des automatisierten Flurförderzeugs AMT auf die Übergabehöhe einzustellen.

In Phase 2 starten das autonome Fahrzeug AT und das automatisierte Flurförderzeug AMT den Übergabeprozess der Last L. Der Fahrer des automatisierten Flurförderzeugs AMT bestätigt den Start des Prozesses, so dass sich das automatisierte Flurförderzeug AMT mit der Last L nicht mehr bewegt.

In Phase 3 senkt das automatisierte Flurförderzeug AMT auf Anweisung des autonomen Fahrzeugs AT das Lastaufnahmemittel LM automatisiert ab. Die Hub-Steuerungs-Anweisungseinheit LCI des autonomen Fahrzeugs AT übermittelt hierzu über die Kommunikationseinrichtungen CD an die Hub-Steuerungseinrichtung LC des automatisierten Flurförderzeugs AMT entsprechende Anweisungen, das Lastaufnahmemittel LM auf die Übergabehöhe einzustellen.

In Phase 4 ist die Übergabehöhe erreicht. Die Hub-Steuerungs-Anweisungseinheit LCI des autonomen Fahrzeugs AT übermittelt nun über die Kommunikationseinrichtungen CD die Information an die Hub-Steuerungseinrichtung LC des automatisierten Flurförderzeugs AMT, dass das Absenken des Lastaufnahmemittels LM gestoppt wird. Hierzu überwacht das autonome Fahrzeug AT mittels einer, in der Figur 2 nicht dargestellten, Sensoreinrichtung kontinuierlich die Hubhöhe des Lastaufnahmemittels LM des automatisierten Flurförderzeugs AMT. Alternativ kann auch das automatisierte Flurförderzeug AMT mit einem Hubhöhensensor ausgestattet sein, der das Erreichen der Übergabehöhe an die Hub-Steuerungs-Anweisungseinheit LCI des autonomen Fahrzeugs AT übermittelt.

In Phase 5 unterfährt das autonome Fahrzeug AT das auf der Übergabehöhe befindliche Lastaufnahmemittel LM des automatisierten Flurförderzeugs AMT. Hierzu verfügt das autonome Fahrzeug AT über eine, in der Figur 2 nicht dargestellte, Fahr-Steuerungseinheit, die Bestandteil der Systemkomponente B ist, welche dazu ausgebildet ist, das Unterfahren des Lastaufnahmemittels LM des Flurförderzeugs AMT durch das autonome Fahrzeug AT zu steuern. Nach dem Unterfahren wird die Lastplattform P des autonomen Fahrzeugs AT mindestens auf die Übergabehöhe angehoben. Durch leichtes Überschreiten der Übergabehöhe stützt sich die Last L auf der Lastplattform P des autonomen Fahrzeugs AT ab und wird vom Lastaufnahmemittel LM des automatisierten Flurförderzeugs AMT abgehoben. Für das Anheben der Lastplattform P des autonomen Fahrzeugs AT ist eine, in der Figur 2 nicht dargestellte, elektronische Lastplattform-Hub-Steuerungseinheit des autonomen Fahrzeugs vorgesehen, die Bestandteil einer Systemkomponente C ist.

In Phase 6 entfernt sich das autonome Fahrzeug AT mit der übergebenen Last L vom automatisierten Flurförderzeug AMT. Hierfür ist die, in der Figur 2 nicht dargestellte, Fahr-Steuerungseinheit des autonomen Fahrzeugs AT vorgesehen, die Bestandteil der Systemkomponente D ist.

In Phase 7 informiert das autonome Fahrzeug AT über die Kommunikationseinrichtungen CD das automatisierte Flurförderzeug AMT, dass der Übergabeprozess der Last L abgeschlossen ist. Der Fahrer des automatisierten Flurförderzeugs AMT kann nun das automatisierten Flurförderzeugs AMT aus dem Übergabebereich herausfahren.

## Patentansprüche

1. System zur Lastübergabe mit einem Flurförderzeug (MT, AMT) mit einem höhenverstellbaren Lastaufnahmemittel (LM) und einem flachen, autonomen Fahrzeug (AT) mit einer anhebbaren Lastplattform (P), wobei das System ein Steuerungssystem umfasst, das derart ausgebildet ist, dass eine Abfolge mindestens folgender Schritte gesteuert wird:
a) Einstellung des Lastaufnahmemittels (LM) des Flurförderzeugs (MT, AMT) auf eine Übergabehöhe,
b) Unterfahren des Lastaufnahmemittels (LM) des Flurförderzeugs (MT, AMT) durch das autonome Fahrzeug (AT),
c) Anheben der Lastplattform (P) des autonomen Fahrzeugs (AT) mindestens auf die Übergabehöhe und Übergeben der Last (L) und
d) Entfernen des Flurförderzeugs (MT, AMT) und des autonomen Fahrzeugs (AT) voneinander.

2. System nach Anspruch 1, **dadurch gekennzeichnet, dass** das Steuerungssystem auf dem autonomen Fahrzeug (AT) untergebracht ist.

3. System nach Anspruch 1 oder 2, **dadurch gekennzeichnet, dass** das System mindestens folgende Systemkomponenten umfasst:
a) eine Systemkomponente A, die dazu ausgebildet ist, das Lastaufnahmemittel (LM) des Flurförderzeugs (MT, AMT) auf eine Übergabehöhe einzustellen,
b) eine Systemkomponente B, die dazu ausgebildet ist, ein Unterfahren des Lastaufnahmemittels (LM) des Flurförderzeugs (MT, AMT) durch das autonome Fahrzeug (AT) zu steuern,
c) eine Systemkomponente C, die dazu ausgebildet ist, ein Anheben der Lastplattform (P) des autonomen Fahrzeugs (AT) mindestens auf die Übergabehöhe und eine Übergabe der Last (L) zwischen dem Flurförderzeug (MT, AMT) und dem autonomen Fahrzeug (AT) zu steuern und
d) eine Systemkomponente D, die dazu ausgebildet ist, ein Entfernen des Flurförderzeugs (MT, AMT) und des autonomen Fahrzeugs (AT) voneinander zu steuern.

4. System nach einem der Ansprüche 1 bis 3, **dadurch gekennzeichnet, dass** das System als halbautomatisches System ausgebildet ist, das als Flurförderzeug (MT, AMT) ein manuelles Flurförderzeug (MT) mit einem Fahrerarbeitsplatz umfasst.

5. System nach Anspruch 4, **dadurch gekennzeichnet, dass** die Systemkomponente A des halbautomatischen Systems manuell bedienbare Bedienelemente des manuellen Flurförderzeugs (MT) zur Höhenverstellung des Lastaufnahmemittels (LM) umfasst.

6. System nach Anspruch 4 oder 5, **dadurch gekennzeichnet, dass** die Systemkomponente A des halbautomatischen Systems eine Lasterkennungseinrichtung (LD) des autonomen Fahrzeugs (AT) umfasst, die dazu ausgebildet ist, die Last (L) auf dem Lastaufnahmemittel (LM) des manuellen Flurförderzeugs (MT) zu erkennen.

7. System nach Anspruch 6, **dadurch gekennzeichnet, dass** die Lasterkennungseinrichtung (LD) eine Kamera und/oder einen QR-Code-Leser und/oder einen Laser umfasst.

8. System nach einem der Ansprüche 4 bis 7, **dadurch gekennzeichnet, dass** die Systemkomponente A des halbautomatischen Systems eine Informationsübermittlungseinrichtung (I) des autonomen Fahrzeugs (AT) umfasst, die dazu ausgebildet ist, an das manuelle Flurförderzeug (MT) Informationen zu übermitteln, das Lastaufnahmemittel (LM) des manuellen Flurförderzeugs (MT) auf die mit einer vorgegebenen Hubhöhe der Lastplattform (P) des autonomen Fahrzeugs (AT) kompatible Übergabehöhe einzustellen.

9. System nach Anspruch 8, **dadurch gekennzeichnet, dass** die Informationsübermittlungseinrichtung (I) eine optische und/oder akustische Signalisierungseinrichtung umfasst.

10. System nach Anspruch 8 oder 9, **dadurch gekennzeichnet, dass** die Informationsübermittlungseinrichtung (I) dazu ausgebildet ist, Informationen über das Erreichen der Übergabehöhe an das manuelle Flurförderzeug (MT) zu übermitteln.

11. System nach einem der Ansprüche 4 bis 10, **dadurch gekennzeichnet, dass** die Systemkomponente A des halbautomatischen Systems eine Sensoreinrichtung des manuellen Flurförderzeugs (MT) umfasst, die dazu ausgebildet ist, die Hubhöhe der Lastaufnahmemittels (LM) des manuellen Flurförderzeugs (MT) zu erkennen.

12. System nach einem der Ansprüche 1 bis 3, **dadurch gekennzeichnet, dass** das System als vollautomatisches System ausgebildet ist, das als Flurförderzeug (MT, AMT) ein, mit einer elektronischen Hub-Steuerungseinrichtung zur Höhenverstellung des Lastaufnahmemittels ausgestattetes Flurförderzeug (AMT) umfasst.

13. System nach Anspruch 12, **dadurch gekennzeichnet, dass** das vollautomatische System Kommunikationseinrichtungen (CD) des Flurförderzeugs (AMT) und des autonomen Fahrzeugs (AT) umfasst, die dazu ausgebildet sind, Informationen zwischen dem Flurförderzeug (AMT) und dem autonomen Fahrzeug (AT) auszutauschen.

14. System nach Anspruch 13, **dadurch gekennzeichnet, dass** die Kommunikationseinrichtungen Funkeinrichtungen, insbesondere WIFI-, Bluetooth-, UWB-, 4G- oder 5G- Funkeinrichtungen, umfassen.

15. System nach Anspruch 13 oder 14, **dadurch gekennzeichnet, dass** die Systemkomponente A des vollautomatischen Systems eine, mit der Kommunikationseinrichtung des autonomen Fahrzeugs (AT) in Wirkverbindung stehende, elektronische Hub-Steuerungs-Anweisungseinheit (LCI) des autonomen Fahrzeugs (AT) umfasst, die dazu ausgebildet ist, Steuerungsanweisungen über die Kommunikationseinrichtung (CD) des autonomen Fahrzeugs (AT) an die Kommunikationseinrichtung (CD) des Flurförderzeugs (AMT) zu übermitteln und die, mit der Kommunikationseinrichtung (CD) des Flurförderzeugs (AMT) in Wirkverbindung stehende, Hub-Steuerungseinrichtung (LC) des Flurförderzeugs (AMT) so zu steuern, dass das Lastaufnahmemittel (LM) des Flurförderzeugs (AMT) auf die, mit einer vorgegebenen Hubhöhe der Lastplattform (P) des autonomen Fahrzeugs (AT) kompatible Übergabehöhe, eingestellt wird.

16. System nach einem der Ansprüche 12 bis 15, **dadurch gekennzeichnet, dass** die Systemkomponente A des vollautomatischen Systems eine Sensoreinrichtung des autonomen Fahrzeugs (AT) umfasst, die dazu ausgebildet ist, die Höhe des Lastaufnahmemittels des Flurförderzeugs (AMT) kontinuierlich zu überwachen.

17. System nach einem der Ansprüche 3 bis 16, **dadurch gekennzeichnet, dass** die Systemkomponente B eine automatische elektronische Fahr-Steuerungseinheit des autonomen Fahrzeugs (AT) umfasst, die dazu ausgebildet ist, ein Unterfahren des Lastaufnahmemittels (LM) des Flurförderzeugs (AMT) durch das autonome Fahrzeug (AT) nach erfolgter Einstellung des Lastaufnahmemittels (LM) auf die Übergabehöhe automatisch zu steuern.

18. System nach einem der Ansprüche 3 bis 17, **dadurch gekennzeichnet, dass** die Systemkomponente C eine elektronische Lastplattform-Hub-Steuerungseinheit des autonomen Fahrzeugs (AT) umfasst, die dazu ausgebildet ist, ein Anheben der Lastplattform (P) des autonomen Fahrzeugs (AT) mindestens auf die Übergabehöhe nach erfolgtem Unterfahren des Lastaufnahmemittels (LM) des Flurförderzeugs (AMT) durch das autonome Fahrzeug (AT) zu steuern.

19. System nach einem der Ansprüche 3 bis 18, **dadurch gekennzeichnet, dass** die Systemkomponente D eine automatische elektronische Fahr-Steuerungseinheit des autonomen Fahrzeugs (AT) und/oder eine Fahr-Steuerungseinrichtung des Flurförderzeugs (AMT) umfasst, die dazu ausgebildet sind, ein Entfernen des Flurförderzeugs (AMT) und des autonomen Fahrzeugs (AT) voneinander nach erfolgter Lastübergabe zu steuern.

20. Verfahren zur Lastübergabe zwischen einem Flurförderzeug (MT, AMT) mit einem höhenverstellbaren Lastaufnahmemittel (LM) und einem flachen, autonomen Fahrzeug (AT) mit einer anhebbaren Lastplattform (P), **dadurch gekennzeichnet, dass** die Lastübergabe durch Ausführung mindestens folgender Verfahrensschritte durchgeführt wird:
a) Einstellung des Lastaufnahmemittels (LM) des Flurförderzeugs (MT, AMT) auf eine Übergabehöhe,
b) Unterfahren des Lastaufnahmemittels (LM) des Flurförderzeugs (MT, AMT) durch das autonome Fahrzeug (AT),
c) Anheben der Lastplattform (P) des autonomen Fahrzeugs (AT) mindestens auf die Übergabehöhe und Übergeben der Last (L) und
d) Entfernen des Flurförderzeugs (MT, AMT) und des autonomen Fahrzeugs (AT) voneinander.

## Claims

1. System for transferring loads using an industrial truck (MT, AMT) having a height-adjustable load pickup means (LM) and a flat, autonomous vehicle (AT) having a raisable load platform (P), wherein the system comprises a control system configured in such a way that a sequence of at least the following steps is controlled:
a) setting the load pickup means (LM) of the industrial truck (MT, AMT) to a transfer height,
b) driving the autonomous vehicle (AT) under the load pickup means (LM) of the industrial truck (MT, AMT),
c) raising the load platform (P) of the autonomous vehicle (AT) at least to the transfer height and transferring the load (L), and
d) moving the industrial truck (MT, AMT) and the autonomous vehicle (AT) away from each other.

2. System according to Claim 1, **characterized in that** the control system is accommodated on the autonomous vehicle (AT).

3. System according to Claim 1 or 2, **characterized in that** the system comprises at least the following system components:
a) a system component A which is configured to set the load pickup means (LM) of the industrial truck (MT, AMT) to a transfer height,
b) a system component B which is configured to control driving of the autonomous vehicle (AT) under the load pickup means (LM) of the industrial truck (MT, AMT),
c) a system component C which is configured to control raising of the load platform (P) of the autonomous vehicle (AT) at least to the transfer height and a transfer of the load (L) between the industrial truck (MT, AMT) and the autonomous vehicle (AT); and
d) a system component D which is configured to control moving of the industrial truck (MT, AMT) and the autonomous vehicle (AT) away from each other.

4. System according to one of Claims 1 to 3, **characterized in that** the system is configured as a semi-automatic system which comprises, as an industrial truck (MT, AMT), a manual industrial truck (MT) with a driver's workplace.

5. System according to Claim 4, **characterized in that** the system component A of the semi-automatic system comprises manually operable operating elements of the manual industrial truck (MT) for adjusting the height of the load pickup means (LM).

6. System according to Claim 4 or 5, **characterized in that** the system component A of the semi-automatic system comprises a load detection device (LD) of the autonomous vehicle (AT), which is configured to detect the load (L) on the load pickup means (LM) of the manual industrial truck (MT).

7. System according to Claim 6, **characterized in that** the load detection device (LD) comprises a camera and/or a QR code reader and/or a laser.

8. System according to one of Claims 4 to 7, **characterized in that** the system component A of the semi-automatic system comprises an information transmission device (I) of the autonomous vehicle (AT), which is configured to transmit information to the manual industrial truck (MT) to set the load pickup means (LM) of the manual industrial truck (MT) to the transfer height compatible with a predefined lifting height of the load platform (P) of the autonomous vehicle (AT).

9. System according to Claim 8, **characterized in that** the information transmission device (I) comprises an optical and/or acoustic signalling device.

10. System according to Claim 8 or 9, **characterized in that** the information transmission device (I) is configured to transmit information about the reaching of the transfer height to the manual industrial truck (MT).

11. System according to one of Claims 4 to 10, **characterized in that** the system component A of the semi-automatic system comprises a sensor device of the manual industrial truck (MT), which is configured to detect the lifting height of the load pickup means (LM) of the manual industrial truck (MT).

12. System according to one of Claims 1 to 3, **characterized in that** the system is configured as a fully automatic system which comprises, as an industrial truck (MT, AMT), an industrial truck (AMT) equipped with an electronic lifting control device for adjusting the height of the load pickup means.

13. System according to Claim 12, **characterized in that** the fully automatic system comprises communication devices (CD) of the industrial truck (AMT) and of the autonomous vehicle (AT), which are configured to exchange information between the industrial truck (AMT) and the autonomous vehicle (AT).

14. System according to Claim 13, **characterized in that** the communication devices comprise radio devices, in particular WIFI, Bluetooth, UWB, 4G or 5G radio devices.

15. System according to Claim 13 or 14, **characterized in that** the system component A of the fully automatic system comprises an electronic lifting control instruction unit (LCI) of the autonomous vehicle (AT), which is operatively connected to the communication device of the autonomous vehicle (AT) and is configured to transmit control instructions via the communication device (CD) of the autonomous vehicle (AT) to the communication device (CD) of the industrial truck (AMT) and to control the lifting control device (LC) of the industrial truck (AMT), which is operatively connected to the communication device (CD) of the industrial truck (AMT), in such a way that the load pickup means (LM) of the industrial truck (AMT) is set to the transfer height compatible with a predefined lifting height of the load platform (P) of the autonomous vehicle (AT).

16. System according to one of Claims 12 to 15, **characterized in that** the system component A of the fully automatic system comprises a sensor device of the autonomous vehicle (AT), which is configured to continuously monitor the height of the load pickup means of the industrial truck (AMT).

17. System according to one of Claims 3 to 16, **characterized in that** the system component B comprises an automatic electronic driving control unit of the autonomous vehicle (AT), which is configured to automatically control driving of the autonomous vehicle (AT) under the load pickup means (LM) of the industrial truck (AMT) after the load pickup means (LM) has been set to the transfer height.

18. System according to one of Claims 3 to 17, **characterized in that** the system component C comprises an electronic load platform lifting control unit of the autonomous vehicle (AT), which is configured to control raising of the load platform (P) of the autonomous vehicle (AT) at least to the transfer height after the autonomous vehicle (AT) has driven under the load pickup means (LM) of the industrial truck (AMT).

19. System according to one of Claims 3 to 18, **characterized in that** the system component D comprises an automatic electronic driving control unit of the autonomous vehicle (AT) and/or a driving control device of the industrial truck (AMT), which are configured to control moving of the industrial truck (AMT) and of the autonomous vehicle (AT) away from each other after the load has been transferred.

20. Method for transferring loads between an industrial truck (MT, AMT) having a height-adjustable load pickup means (LM) and a flat, autonomous vehicle (AT) having a raisable load platform (P), **characterized in that** the loads are transferred by carrying out at least the following method steps:
a) setting the load pickup means (LM) of the industrial truck (MT, AMT) to a transfer height,
b) driving the autonomous vehicle (AT) under the load pickup means (LM) of the industrial truck (MT, AMT),
c) raising the load platform (P) of the autonomous vehicle (AT) at least to the transfer height and transferring the load (L), and
d) moving the industrial truck (MT, AMT) and the autonomous vehicle (AT) away from each other.

## Revendications

1. Système de transfert de charge comprenant un chariot élévateur (MT, AMT) pourvu d'un moyen de prise de charge (LM) réglable en hauteur et un véhicule plat et autonome (AT) pourvu d'une plate-forme de charge relevable (P), le système comprenant un système de commande qui est conçu de manière à commander une séquence d'au moins les étapes suivantes :
a) réglage du moyen de prise de charge (LM) du chariot élévateur (MT, AMT) à une hauteur de transfert,
b) passage du véhicule autonome (AT) sous le moyen de prise de charge (LM) du chariot élévateur (MT, AMT),
c) levage de la plate-forme de charge (P) du véhicule autonome (AT) au moins à la hauteur de transfert et transfert de la charge (L) et
d) éloignement du chariot élévateur (MT, AMT) et du véhicule autonome (AT) l'un par rapport à l'autre.

2. Système selon la revendication 1, **caractérisé en ce que** le système de commande est installé sur le véhicule autonome (AT).

3. Système selon la revendication 1 ou 2, **caractérisé en ce que** le système comprend au moins les composants système suivants :
a) un composant système A qui est conçu pour régler le moyen de prise de charge (LM) du chariot élévateur (MT, AMT) à une hauteur de transfert,
b) un composant système B qui est conçu pour commander un passage du véhicule autonome (AT) sous le moyen de prise de charge (LM) du chariot élévateur (MT, AMT),
c) un composant système C qui est conçu pour commander un levage de la plate-forme de charge (P) du véhicule autonome (AT) au moins à la hauteur de transfert et un transfert de la charge (L) entre le chariot élévateur (MT, AMT) et le véhicule autonome (AT), et
d) un composant système D qui est conçu pour commander un éloignement du chariot élévateur (MT, AMT) et du véhicule autonome (AT) l'un par rapport à l'autre.

4. Système selon l'une des revendications 1 à 3, **caractérisé en ce que** le système est conçu sous la forme d'un système semi-automatique qui comprend, en tant que chariot élévateur (MT, AMT), un chariot élévateur manuel (MT) pourvu d'un poste de conduite.

5. Système selon la revendication 4, **caractérisé en ce que** le composant système A du système semi-automatique comprend des éléments de commande du chariot élévateur manuel (MT) pouvant être actionnés manuellement pour le réglage en hauteur du moyen de prise de charge (LM).

6. Système selon la revendication 4 ou 5, **caractérisé en ce que** le composant système A du système semi-automatique comprend un dispositif de détection de charge (LD) du véhicule autonome (AT), qui est conçu pour détecter la charge (L) présente sur le moyen de prise de charge (LM) du chariot élévateur manuel (MT).

7. Système selon la revendication 6, **caractérisé en ce que** le dispositif de détection de charge (LD) comprend une caméra et/ou un lecteur de code QR et/ou un laser.

8. Système selon l'une des revendications 4 à 7, **caractérisé en ce que** le composant système A du système semi-automatique comprend un dispositif de transmission d'informations (I) du véhicule autonome (AT), qui est conçu pour transmettre au chariot élévateur manuel (MT) des informations permettant de régler le moyen de prise de charge (LM) du chariot élévateur manuel (MT) à la hauteur de transfert qui est compatible avec une hauteur de levage prédéterminée de la plate-forme de charge (P) du véhicule autonome (AT).

9. Système selon la revendication 8, **caractérisé en ce que** le dispositif de transmission d'informations (I) comprend un dispositif de signalisation optique et/ou acoustique.

10. Système selon la revendication 8 ou 9, **caractérisé en ce que** le dispositif de transmission d'informations (I) est conçu pour transmettre au chariot élévateur manuel (MT) des informations concernant le fait que la hauteur de transfert a été atteinte.

11. Système selon l'une des revendications 4 à 10, **caractérisé en ce que** le composant système A du système semi-automatique comprend un dispositif de détection du chariot élévateur manuel (MT), qui est conçu pour détecter la hauteur de levage du moyen de prise de charge (LM) du chariot élévateur manuel (MT).

12. Système selon l'une des revendications 1 à 3, **caractérisé en ce que** le système est conçu sous la forme d'un système entièrement automatique qui comprend, en tant que chariot élévateur (MT, AMT), un chariot élévateur (AMT) équipé d'un dispositif de commande de levage électronique permettant le réglage en hauteur du moyen de prise de charge.

13. Système selon la revendication 12, **caractérisé en ce que** le système entièrement automatique comprend des dispositifs de communication (CD) du chariot élévateur (AMT) et du véhicule autonome (AT), qui sont conçus pour échanger des informations entre le chariot élévateur (AMT) et le véhicule autonome (AT).

14. Système selon la revendication 13, **caractérisé en ce que** les dispositifs de communication comprennent des dispositifs radio, notamment des dispositifs radio WIFI, Bluetooth, UWB, 4G ou 5G.

15. Système selon la revendication 13 ou 14, **caractérisé en ce que** le composant système A du système entièrement automatique comprend une unité d'instruction de commande de levage électronique (LCI) du véhicule autonome (AT), en liaison fonctionnelle avec le dispositif de communication du véhicule autonome (AT), qui est conçue pour transmettre des instructions de commande au dispositif de communication (CD) du chariot élévateur (AMT) par l'intermédiaire du dispositif de communication (CD) du véhicule autonome (AT) et pour commander le dispositif de commande de levage (LC) du chariot élévateur (AMT), en liaison fonctionnelle avec le dispositif de communication (CD) du chariot élévateur (AMT), de manière à régler le moyen de prise de charge (LM) du chariot élévateur (AMT) à la hauteur de transfert qui est compatible avec une hauteur de levage prédéterminée de la plate-forme de charge (P) du véhicule autonome (AT).

16. Système selon l'une des revendications 12 à 15, **caractérisé en ce que** le composant système A du système entièrement automatique comprend un dispositif de détection du véhicule autonome (AT) qui est conçu pour surveiller en continu la hauteur du moyen de prise de charge du chariot élévateur (AMT).

17. Système selon l'une des revendications 3 à 16, **caractérisé en ce que** le composant système B comprend une unité de commande de conduite électronique automatique du véhicule autonome (AT), qui est conçue pour commander automatiquement un passage du véhicule autonome (AT) sous le moyen de prise de charge (LM) du chariot élévateur (AMT) après que le réglage du moyen de prise de charge (LM) à la hauteur de transfert a été effectué.

18. Système selon l'une des revendications 3 à 17, **caractérisé en ce que** le composant système C comprend une unité de commande de levage électronique de la plate-forme de charge du véhicule autonome (AT), qui est conçue pour commander un levage de la plate-forme de charge (P) du véhicule autonome (AT) au moins à la hauteur de transfert après que le passage du véhicule autonome (AT) sous le moyen de prise de charge (LM) du chariot élévateur (AMT) a été effectué.

19. Système selon l'une des revendications 3 à 18, **caractérisé en ce que** le composant système D comprend une unité de commande de conduite électronique automatique du véhicule autonome (AT) et/ou un dispositif de commande de conduite du chariot élévateur (AMT), qui sont conçus pour commander un éloignement du chariot élévateur (AMT) et du véhicule autonome (AT) l'un par rapport à l'autre après que le transfert de charge a été effectué.

20. Procédé de transfert de charge entre un chariot élévateur (MT, AMT) pourvu d'un moyen de prise de charge (LM) réglable en hauteur et un véhicule plat et autonome (AT) pourvu d'une plate-forme de charge (P) relevable, **caractérisé en ce que** le transfert de charge est mis en œuvre en effectuant au moins les étapes de procédé suivantes :
a) réglage du moyen de prise de charge (LM) du chariot élévateur (MT, AMT)
à une hauteur de transfert,
b) passage du véhicule autonome (AT) sous le moyen de prise de charge (LM) du chariot élévateur (MT, AMT),
c) levage de la plate-forme de charge (P) du véhicule autonome (AT) au moins à la hauteur de transfert et transfert de la charge (L) et
d) éloignement du chariot élévateur (MT, AMT) et du véhicule autonome (AT) l'un par rapport à l'autre.
